# EUROPEAN PATENT SPECIFICATION

(11) **EP 1 589 321 B1**
(45) Date of publication and mention of the grant of the patent: **26.08.2015**
(21) Application number: 05006966.5
(22) Date of filing: 30.03.2005
(51) Int. Cl.: G01C 21/34, G06F 17/22

(54) **Route guidance method, navigation apparatus, portable terminal, and information server**
Routenführungsverfahren, Navigationsgerät, tragbares Endgerät und Informationsserver
Procédé de guidage routier, appareil de navigation, terminal portable et serveur d'informations

(30) Priority: 22.04.2004 JP 2004127107
(43) Date of publication of application: 26.10.2005
(73) Proprietor: AISIN AW CO., LTD., Anjo-shi, Aichi 444-1192 (JP)
(72) Inventor: Tomita, Hiroshi, Aichi 444-8564 (JP); Nagase, Kenji, Aichi 444-8564 (JP)
(74) Representative: Kramer Barske Schmidtchen Patentanwälte PartG mbB

(56) References cited:
- EP-A- 1 302 749
- EP-A- 1 371 950
- WO-A-2004/059251
- JP-A- 2004 117 285
- US-A1- 2004 027 258

## Description

### INCORPORATION BY REFERENCE

Reference is made to Japanese Patent Application No. 2004-127107 filed on April 22, 2004, including the specification, drawings and abstract thereof, is incorporated herein by reference in its entirety.

### BACKGROUND OF THE INVENTION

### 1. Field of the Invention

The present invention relates to a route guidance method, a navigation apparatus, a portable terminal and an information server.

### 2. Description of the Related Art

In some cases, en route to a destination, a car is parked at a parking lot located close to the destination or a station, and a further movement to the destination is performed on foot or using a public transportation system. In such cases, a navigation system may provide route guidance for a route to the parking lot by indicating the route on a map displayed on a display. For guidance of a route from the parking lot to the destination, a portable terminal having a GPS capability and a route guidance capability may be used. However, to use such a portable terminal, a user has to perform a complicated and troublesome task to input information associated with the destination to the portable terminal when the user leaves the car.

In another known technique, when a destination is reached, a navigation apparatus is operated to store the destination as a registered point in a server (refer to, for example, Japanese Unexamined Patent Application Publication No. 2004-20304). In this technique, after the destination has been registered, if the server detects that a user is leaving a car, the server transmits information indicating a route from the point where the user is leaving the car to the registered point (destination) to a portable terminal used by the user.

In the known technique described above, when a destination is reached, it is necessary to perform an operation to register the destination as a registered point. Although this makes it unnecessary for a user to manually input destination information to the portable terminal, it is impossible to acquire route information via the portable terminal in a case in which the user leaves his/her car en route to the destination. US 2004/027 258 A1 relates to data distribution and display systems and in particular to map data display systems, wherein a map server provides route guidance data showing a preferred route which is then rendered by a portable terminal, which transmits location data to the map server via internet and a cellular telephone network together with information associated with destination data.

EP 1 302 749 A2 relates to a technical field of communication navigation and more particularly to the technical field of switching movable bodies to be a subject of the navigation.

JP 2004 117285 A relates to a route searching system allowing easy input operation of position information by using a two-dimensional bar code displayed on a cell phone which is read by an image sensor of a navigation device.

### SUMMARY OF THE INVENTION

In view of the above, an object of the present invention is to provide a more convenient technique of providing route information to a user by using a navigation apparatus and a portable terminal.

To solve the problems described above, the present invention provides a navigation methods as defined in claim 1.

A navigation method in the present invention includes a step, performed by a navigation apparatus, of detecting a current position and displaying map of a current-position area, searching for a route from the current position to a destination, producing a code based on information associated with the destination and the current position en route to the destination, and displaying the produced code on the display, further a step, performed by a portable terminal, acquiring image information of the code by capturing an image of the code displayed on the display and providing route guidance on a route to the destination based on the image information.

The navigation method may further include a step, performed by an information server connected to the portable terminal via a two-way communication line, of receiving image information produced by capturing the image of the code by the portable terminal, and extracting information associated with the current position and the destination by analyzing the received image information.

In this navigation method, the information server connected to the portable terminal via the two-way communication line extracts information associated with the current position and the destination by analyzing the image information obtained by capturing the image of the code. This makes it possible for the portable terminal to extract the information associated with the current position and the destination without needing the capability of analyzing the image information.

The navigation method may further include a step, performed by the portable terminal, of extracting information associated with the current position and the destination by analyzing the image information obtained by capturing the image of the code.

In this navigation method, the portable terminal extracts the information associated with the current position and the destination by analyzing the image information obtained by capturing the image of the code. This makes it unnecessary to use an external apparatus for analyzing the code.

The navigation method may further include a step, performed by an information server, of searching for a route from the current position to the destination based on the extracted information associated with the current position and the destination, and transmitting information associated with the route.

In this navigation method, the information server transmits the information associated with the route from the current position to the destination based on the extracted information associated with the current position and the destination. This makes it possible for the portable terminal to acquire the information associated with the route guidance from the information server, without needing the searching capability.

The navigation method may further include a step, performed by the portable terminal, of searching for a route from the current position to the destination based on the extracted information associated with the current position and the destination.

In this navigation method, the portable terminal searches for the route from the current position to the destination based on the extracted information associated with the current position and the destination. This makes it unnecessary to use an external apparatus to search for the route to the destination from the current position at which the user leaves his/her car en route to the destination.

The navigation method may further include a step, performed by the navigation apparatus, of searching for a route from the current position to the destination based on the information associated with the current position and the destination, and incorporating information associated with the route into the code.

In this navigation method, the code produced by the navigation apparatus includes information associated with the route to the destination. This makes it possible to acquire the information associated with the route from the current position to the destination simply by extracting the information associated with the route by analyzing the image information obtained by capturing the image of the code.

The navigation method may further include a step, performed by an information server connected to the portable terminal via a two-way communication line, of producing information on a route or a running schedule of a transportation system based on the extracted information associated with the current position and the destination and transmitting the produced information on the route or the running schedule of the transportation system to the portable terminal.

In this navigation method, the information server produces the information on the route or the running schedule of the transportation system based on the extracted information associated with the current position and the destination and transmits the produced information on the route or the running schedule of the transportation system to the portable terminal. This makes it possible to acquire information associated with the transportation system when the transportation system is used en route to the destination.

The navigation method may further include a step, performed by the portable terminal or an information server connected to the portable terminal via a two-way communication line, of transmitting facility information associated with the current position or facility information associated with the destination to the portable terminal, based on the extracted information associated with the current position and the destination.

In this navigation method, the portable terminal or the information server transmits facility information associated with the current position or facility information associated with the destination to the portable terminal, based on the information associated with the current position and the destination extracted from the image information obtained by capturing the image of the code produced by the navigation apparatus. This makes it possible for the portable terminal to acquire information about facilities located in the vicinity of the current position or the destination without needing a position detection capability or without needing to store facility information in a storage unit disposed in the portable terminal.

The present invention also provides a navigation systems, as defined in claim 9.

In this navigation apparatus, the code, which is produced based on the information associated with the current position and the destination and whose image can be captured by a portable terminal, is displayed on a display of the navigation apparatus. Thus, in a case in which a user uses a portable terminal to acquire route guidance on a route to a middle position to the final destination, it is possible to transfer the information associated with the current position and the destination to the portable terminal by capturing the image of the code displayed on the display. This makes it possible for the portable terminal to acquire the information associated with the current position without needing the capability of detecting the current position and also makes it possible for the portable terminal to acquire the information associated with the destination simply by capturing the image of the code without needing to re-input the information associated with the destination.

### BRIEF DESCRIPTION OF THE DRAWINGS

Fig. 1 is a schematic diagram of a route guidance system according to an embodiment.
Fig. 2 is a block diagram showing an electrical configuration of a navigation apparatus of a route guidance system according to an embodiment.
Fig. 3 is a block diagram showing an electrical configuration of a portable terminal of a route guidance system according to an embodiment.
Fig. 4 is a block diagram showing an electrical configuration of a server of a route guidance system according to an embodiment.
Fig. 5 is a flow chart showing a procedure according to an embodiment.
Fig. 6 is a diagram showing an example of a screen displayed on a display of a navigation apparatus according to an embodiment.
Fig. 7 is a diagram showing an example of a screen displayed on a display of a navigation apparatus according to an embodiment.
Fig. 8 is a flow chart showing a procedure according to an embodiment.
Fig. 9 is a diagram showing examples of screens displayed on a display of a portable terminal according to an embodiment.
Fig. 10 is a flow chart showing a procedure according to an embodiment.
Fig. 11 is a flow chart showing a procedure according to an embodiment.
Fig. 12 is a diagram showing examples of screens displayed on a display of a portable terminal according to an embodiment.
Fig. 13 is a flow chart showing a procedure according to an embodiment.
Fig. 14 is a flow chart showing a procedure according to an embodiment.
Fig. 15 is a flow chart showing a procedure according to an embodiment.
Fig. 16 is a diagram showing an example of a screen displayed on a display of a navigation apparatus according to an embodiment.
Fig. 17 is a diagram showing an example of a screen displayed on a display of a navigation apparatus according to an embodiment.
Fig. 18 is a diagram showing an example of a screen displayed on a display of a navigation apparatus according to an embodiment.

### DESCRIPTION OF PREFERRED EMBODIMENTS and examples for explaining the invention

### First Example

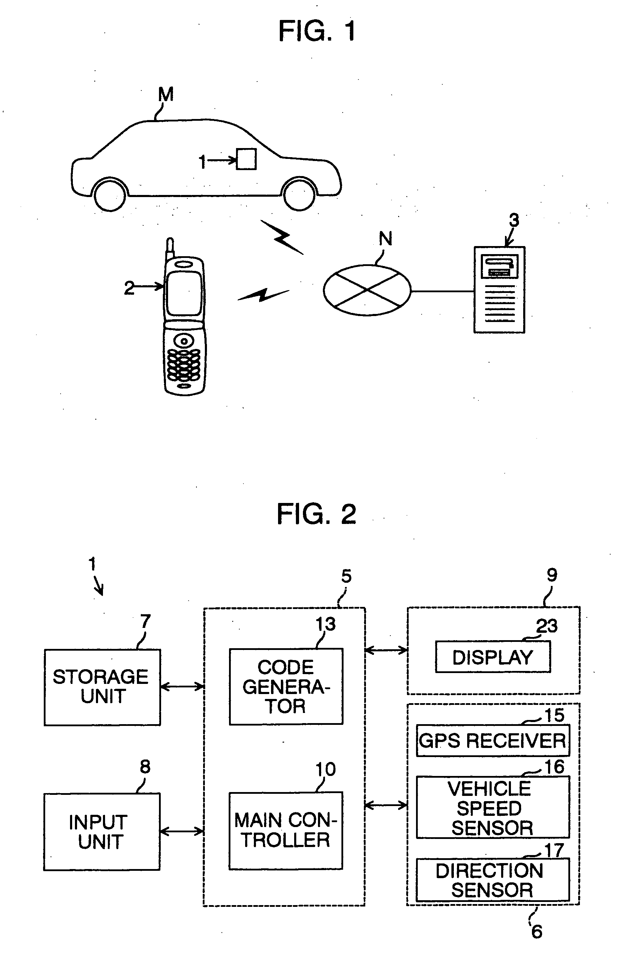

A first example of the invention is described with reference to Figs. 1 to 9. Fig. 1 is a schematic diagram of a route guidance system.

As shown in Fig. 1, the route guidance system includes a navigation apparatus 1 installed in a vehicle M, a portable terminal 2 used by a user, and a server 3 functioning as an information server installed in an information center. The navigation apparatus 1 is connected to the server 3 via a network N that allows two-way data communication between the navigation apparatus 1 and the server 3. The portable terminal 2 is also connected to the server 3 via the network N for data communication therewith.

The navigation apparatus 1 is described in detail below. Fig. 2 is a schematic diagram illustrating an electrical structure of a navigation apparatus 1. As shown in Fig. 2, the navigation apparatus 1 includes a controller 5, a position detection unit 6, a storage unit 7, an input unit 8, and an output unit 9.

The controller 5 includes a main controller 10 and a code generator 13 serving as code generation means. In accordance with a route guidance program, the main controller 10 performs processing such as searching for a route from a current position to a destination and displaying a detected route. The main controller 10 also performs data communication with the server 3 in accordance with the route guidance program.

The code generator 13 generates a 2-dimensional code by coding a present position and/or a destination, a URL of the server 3, and authentification information. The generated 2-dimensional code output from the code generator 13 is supplied to the output unit 9.

The position detection unit 6 detects the present position of the vehicle M. The position detection unit 6 includes a GPS receiver 15, a vehicle speed sensor 16, and a direction sensor 17.

The storage unit 7 stores various programs executed by the main controller 10 of the controller 5 or the code generator 13. For example, the programs include a program for data communication with the server 3, a program for displaying a map and route guidance information on the display 23 of the output unit 9, and a program for displaying the 2-dimensional code. The storage unit 7 also stores data such as destination data used to set a destination, and map data and road data used in rout searching.

The input unit 8 is composed of switches or a remote controller. The input unit 8 is used to input various control signals to the controller 5 to controls setting of a destination, searching for a route, and route guidance. The output unit 9 includes a display unit 23 and a speaker. The display unit 23 is composed of, for example, a liquid crystal display with a touch panel, and is used to display an image and various kinds of information produced as a result of various processes performed by the main controller 10 of the controller 5 or the code generator 13.

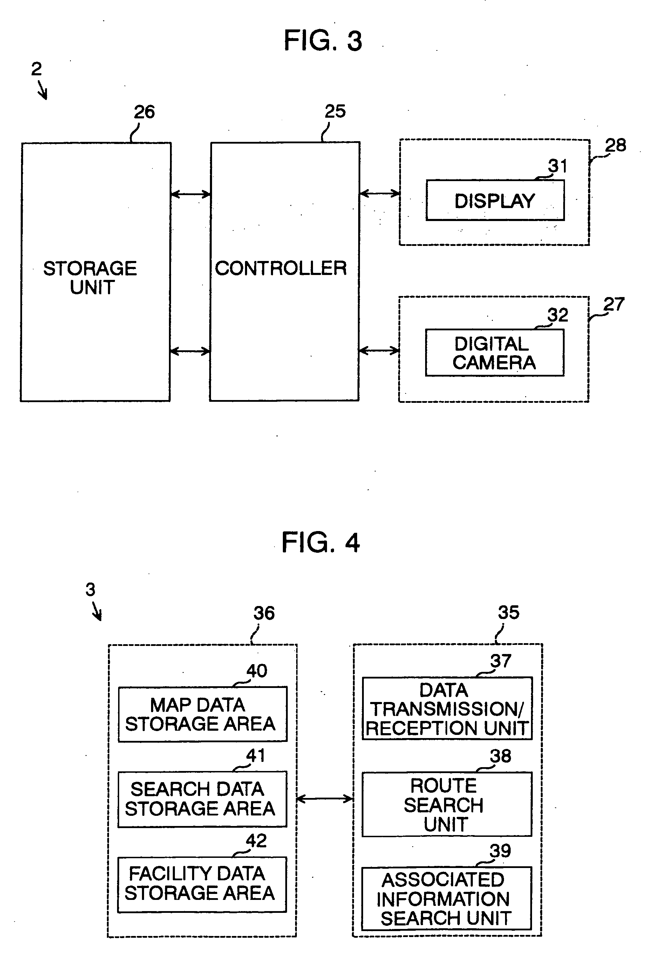

Now the portable terminal 2 is described in further detail below. Fig. 3 is a schematic diagram illustrating the electrical structure of the portable terminal 2. The portable terminal 2 is a terminal carried by a user. Specific examples of the portable terminal 2 include a portable telephone and a PDA device. The portable terminal 2 includes a Controller 25, a storage unit 26, an input unit 27, and an output unit 28.

The controller 25 controls data transmission with the server 3. The storage unit 26 stores various kinds of programs including a browser program. The storage unit 26 also stores data received from the server 3 and data input via the input unit 27. The input unit 27 includes a digital camera 32 serving as an imaging unit and also includes an input button. The digital camera 32 is for capturing an image. For example, a CCD camera is used as the digital camera 32. Capturing of a 2-dimensional code displayed on the display unit 23 of the navigation apparatus 1 is performed using the digital camera 32. The output unit 28 includes a display unit 31 for displaying a map and an operation screen, and also includes a speaker.

Next, the server 3 installed in the information center is explained. Fig. 4 is a schematic diagram showing the electrical configuration of the server 3. As shown in Fig. 4, the server 3 includes a controller 35 and a storage unit 36.

The controller 35 includes a data transmission/reception unit 37 serving as analysis means, a route search unit 38, and an associated information search unit 39. The data transmission/reception unit 37 performs data transmission with the navigation apparatus 1 or the portable terminal 2. The route search unit 38 searches for a route from a current position to a destination, based on position information associated with the current position and the destination received from the navigation apparatus 1. In the case in which the route includes a public transportation system, the route search unit 38 searches for a line of the public transportation system to be used.

The associated information search unit 39 searches for associated information such as facility information at particular points or a train schedule information (timetable information), based on a signal received from the navigation apparatus 1 or the portable terminal 2. The information, detected by the rout search unit 38, associated with the route from the current position to the destination and the facility information detected by the associated information search unit 39 are transmitted by the data transmission/reception unit 37 to the portable terminal 2.

The storage unit 36 of the server 3 stores the route guidance program used to analyze two-dimensional codes. The storage unit 36 includes a map data storage unit 40, a search data storage unit 41, and a facility data storage unit 42. The map data storage unit 40 stores map data used to display a map on the display unit 31 of the portable terminal 2. The search data storage unit 41 stores data including road data and node data used in searching for a shortest route between two points. The search data storage unit 41 also stores train schedule information of public transportation systems such as train systems. The facility data storage unit 42 stores information associated with facilities such as hospitals and schools located in various areas.

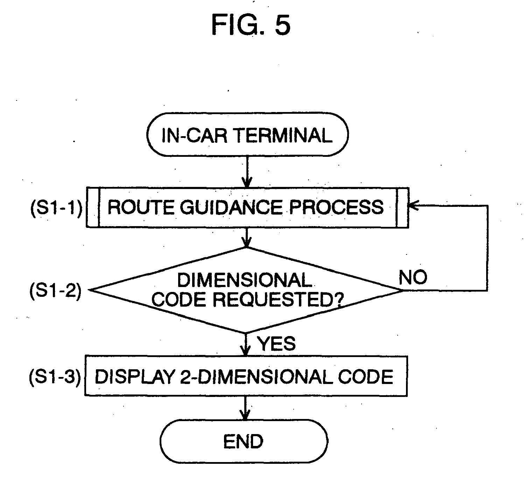

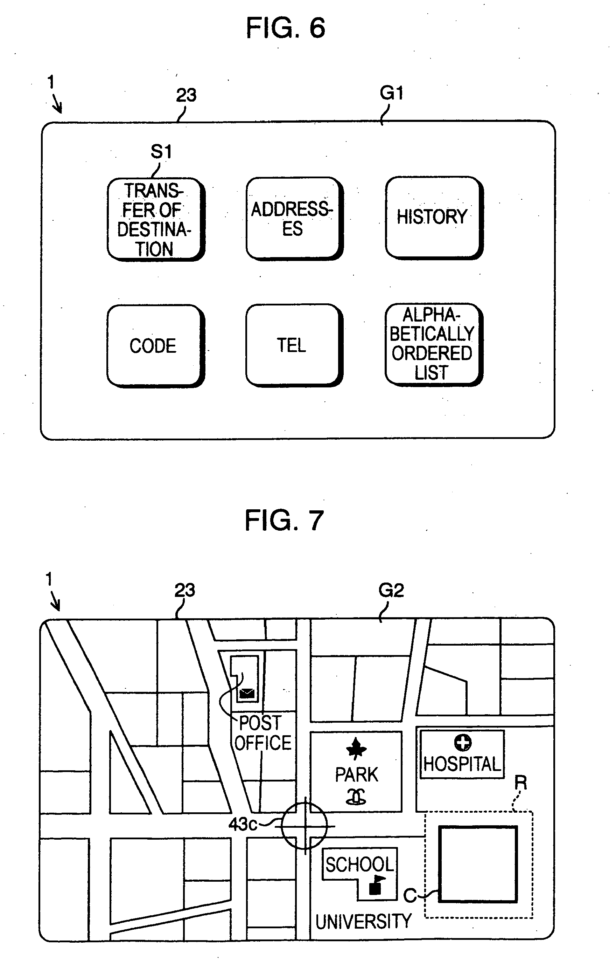

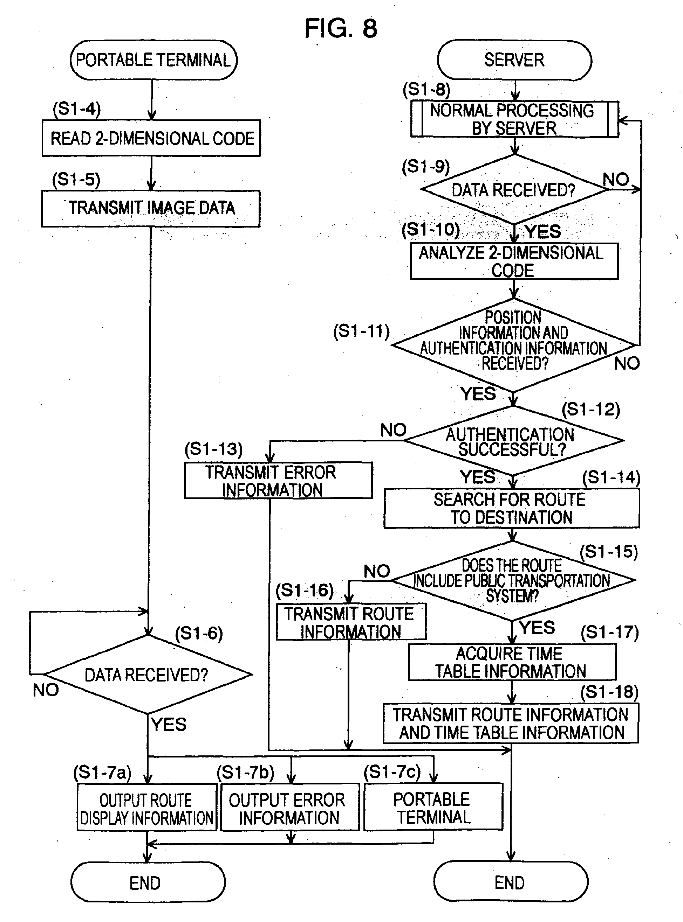

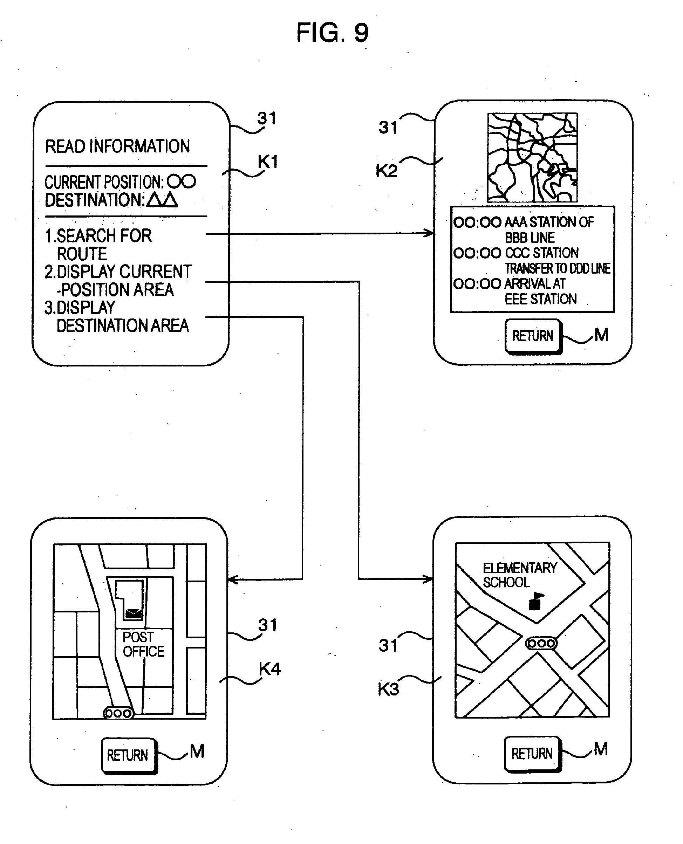

Now, a route guidance method according to an embodiment of the invention is described below, with reference to Figs. 5 to 9. Fig. 5 is a flow chart showing a process according to the present embodiment. Figs. 6 and 7 show examples of screens displayed on the display unit 23 of the navigation apparatus 1. Fig. 8 is a flow chart of a process according to the present embodiment. Fig. 9 is a schematic diagram showing examples of screens displayed on the display unit 31 of the portable terminal 2.

Let it be assumed that the navigation apparatus 1 is now providing route guidance by displaying a route from a current position to a destination on the display unit 23.

The navigation apparatus 1 operates as follows. In Fig. 5, the navigation apparatus 1 (the controller 5) is executing a route guidance program to provide route guidance from the current position to the destination by displaying a map of a current-position area on the display unit 23 (step S1-1). When a user parks a vehicle M at a parking lot or the like en route to the destination and leaves the vehicle M, the user operates a switch on the input unit 8 of the navigation apparatus 1 to display a setting screen G1 shown in Fig. 6 for transferring information associated with the destination on the display unit 23.

As shown in Fig. 6, the setting screen G1 includes an address setting button, a history button, and a destination transfer button S1. If a user touches the destination transfer button S1 on the setting screen G1, the navigation apparatus 1 (the controller 5) determines that a destination transfer command has been issued (step S1-2 is answered affirmatively), the navigation apparatus 1 produces a 2-dimensional code by the code generator 13 and displays the generated 2-dimensional code on the display unit 23 (step S1-3). The 2-dimensional code C is displayed, as shown in Fig. 7, in a display area R in a lower right corner of the display unit 23 on which the map is also displayed.

The 2-dimensional code C includes coded information associated with the current position and/or the destination set by the user in the navigation apparatus 1. The 2-dimensional code C can include a large amount of information in a small area and can be read from an arbitrary direction. When the 2-dimensional code C is generated in the above-described process, the information associated with the current position is given by the position detection unit 6, and the information associated with the destination is read from the storage unit 7. The 2-dimensional code C displayed also includes coded information associated with the URL of the server 3 of the information center and authentication information needed to access the server 3. The information associated with the URL and the authentication information represented in the 2-dimensional code C are acquired from the storage unit 7.

When the 2-dimensional code displayed on the navigation apparatus 1 is read (captured) by the portable terminal 2, the process by the navigation apparatus 1 is completed and electric power thereof is turned off.

Next, the operation of the portable terminal 2 is explained with reference to Fig. 8.

When the 2-dimensional code C is displayed on the display unit 23 of the navigation apparatus 1, the user captures the image of the 2-dimensional code C using the digital camera 32 of the portable terminal 2 (step S1-4) . The controller 25 temporarily stores the captured 2-dimensional code as image data (image information) in the storage unit 26. In response to an operation performed by the user, the controller 25 transmits the image data of the 2-dimensional code stored in the storage unit 26 to the server 3 (step S1-5).

After the transmission of the image data of the 2-dimensional code, the portable terminal 2 (the controller 25) waits for route guidance information transmitted, in response to the image data, from the server 3 (step S1-6). More specifically, in accordance with information indicated by the image data (the 2-dimensional code), the server 3 transmits route guidance information or error information to the portable terminal 2. Depending on the situation, the route guidance information includes route information and train schedule information (timetable information) or includes only route information. In a case in which the server 3 receives image data (2-dimensional code) from an unauthorized portable terminal, the server 3 transmits, to the portable terminal, error information including a message indicating that the portable terminal is not allowed to receive route guidance.

If the portable terminal 2 receives the route guidance information from the server 3 (that is, if step S1-6 is answered affirmatively), the portable terminal 2 (the controller 25) displays the route guidance from the current position to the destination on the display unit 31. In the case in which the route guidance information received from the server 3 includes schedule information of the public transportation system to be used en route to the destination, as well as the route information, the schedule information is also displayed on the display unit 31 (step S1-7a). More specifically, if the portable terminal 2 (the controller 25) receives the route information and the train schedule information, the portable terminal 2 (the controller 25) first displays a menu screen K1 on the display unit 31 as shown in Fig. 9. The place name of the current position and the place name of the destination are displayed on the menu screen K1. The menu screen K1 also includes items of "Search for route", "Display current-position area", and "Display destination area", which are selectable by pressing a corresponding button. As shown in Fig. 9, if "Search for route" is selected, the portable terminal 2 (the controller 25) displays a route display screen K2. In a case in which "Display current-position area" is selected, a current-position area map screen K3 is displayed. If "Display destination area" is selected, a destination are map screen K4 is displayed.

On the route display screen K2, a route guidance map from the current position to the destination is displayed. In the case in which a public transportation system is used en route to the destination, a departure station and a departure time table, a transfer station and a transfer time table, and an arrival station and an arrival time table are also displayed. On the current-position area map screen K3, a map of an area in the vicinity of the current position is displayed. On the destination area map screen K4, a map of an area in the vicinity of the destination is displayed. The user can easily reach the destination in accordance with information displayed on the screens K2 to K4. In the case in which the public transportation system is used, the user can easily determine by what time it is necessary to reach the departure station, based on the displayed information associated with the departure station and the departure times, the transfer station and the transfer time table, and the arrival station and the arrival time table.

If the route guidance information received in step S1-6 includes only route information, the portable terminal 2 (the controller 25) displays the map indicating route guidance from the current position to the destination on the display unit 31 (step S1-7b). More specifically, the portable terminal 2 (the controller 25) displays the menu screen K1, the route display screen K2, the current-position area map screen K3, and the destination area map screen K4 similar to those shown in Fig. 9 except that train schedule information is hot displayed on the route display screen K2. Thus, the user can easily reach the destination in accordance with information displayed on the screens K2 to K4.

In a case in which error information is received in step S1-6, the portable terminal 2 (the controller 25) displays, on the display unit 31, a message indicating that displaying of route guidance is not allowed (step S1-7c).

Next, the operation of the server 3 is described with reference to Fig. 8.

The server 3 waits for the image data of the 2-dimensional code transmitted from the portable terminal 2, while performing normal processing (steps S1-8 and S1-9). If the image data is received (if step S1-9 is answered affirmatively), the data transmission/reception unit 37 of the server 3 analyzes the 2-dimensional code included in the received image data (step S1-10). More specifically, the data transmission/reception unit 37 extracts information associated with the current position, information associated with the destination, and authentication information needed to access the server 3, from the image data of the 2-dimensional code.

If the data transmission/reception unit 37 can extract neither information associated with the current position and the destination (position information) nor the authentication information needed to access the server 3 (that is, if step S1-11 is answered negatively), the data transmission/reception unit 37 of the server 3 performs normal processing (step S1-8) and waits for arrival of image data of a 2-dimensional code transmitted from the portable terminal 2 (step S1-9).

If information associated with the current position and the destination (position information) and authentication information are successfully extracted from the image data (that is, if step S1-11 is answered affirmatively), the data transmission/reception unit 37 compares the extracted authentication information with pre-registered authentication information (step S1-12). More specifically, the data transmission/reception unit 37 verifies the received authentication information based on user information stored in a user information storage unit (not shown). If the authentication is unsuccessful (step S1-12 is answered negatively), the data transmission/reception unit 37 transmits error information to the portable terminal 2 (step S1-13).

On the other hand, if the authentication is successful (step S1-12 is answered affirmatively), the server 3 searches for a route from the current position (car-parking position) to the destination, based on the extracted information associated with the current position and the destination (step S1-14). More specifically, the route search unit 38 of the server 3 produces optimum route information indicating an optimum route from the current position (car-parking position) to the destination based on search data stored in the search data storage unit 41. The route search unit 38 extracts map data (map information) from the map data storage unit 40 based on the optimum route information, and produces route information used to display a map including the optimum route.

The route search unit 38 then examines the produced optimum route information to determine whether a public transportation system is to be used en route. (step S1-15). If it is determined that no public transportation system is used en route to the destination (step S1-15 is answered negatively), the server 3 (the data transmission/reception unit 37) transmits the optimum route information as route information to the portable terminal 2 (step S1-16).

On the other hand, if it is determined that a public transportation system is used en route to the destination (step S1-15 is answered affirmatively), the associated information search unit 39 of the server 3 acquires train schedule data (step S1-17). More specifically, the associated information search unit 39 reads information from the search data storage unit 41 of the server 3 and produces information associated with routes (lines) of the public transportation system such as a train system. The associated information search unit 39 reads train schedule information from a train schedule storage unit (not shown) of the server 3 and produces a train schedule table (indicating a departure station, a departure time, an arrival station, and an arrival time (and also a transfer station and a transfer time, if transfer is necessary)). The data transmission/reception unit 37 transmits train schedule information including the train line information and the train schedule table together with the route information to the portable terminal 2 (step S1-18).

The first example described above provides the following advantages.

In the first example, the navigation apparatus 1 produces a 2-dimensional code based on information (position information) associated with a car-parking position and a destination, and displays the produced 2-dimensional code on the display unit 23. The portable terminal 2 reads the displayed 2-dimensional code by capturing the image of the 2-dimensional code using the digital camera 32 and transmits the image data to the server 3. The server 3 extracts the position information by analyzing the received image data. The server 3 searches for a route from the car-parking position to the destination based on the extracted position information, and transmits route guidance information indicating the detected route to the portable terminal 2.

Thus, in a case in which a user leaves his/her vehicle M en route to the destination, and walks or uses a public transportation system to reach the destination, the user can acquire information associated with the route from the car-parking position to the destination via the portable terminal 2, even if the portable terminal 2 does not have a position detection capability using a GPS or the like, a route searching capability, and a 2-dimensional code analysis capability. The user does not need to operate input buttons or the like of the portable terminal 2 to input information associated with the destination. This provides great convenience to the user.

### Second Example

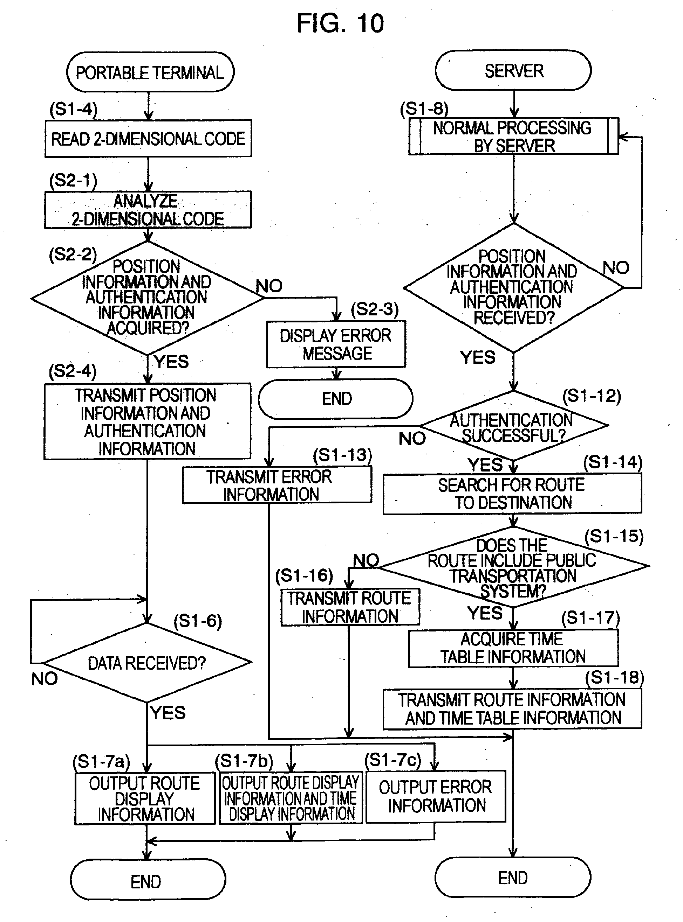

A second example for explaining the present invention is described below with reference to Fig. 10. The second example is similar to the first example except for some modification in processing.

That is, in the second example, the controller 25 (analysis means) of the portable terminal 2 analyzes the image data of the 2-dimensional code, and the data transmission/reception unit 37 of the server 3 does not analyze the image data of the 2-dimensional code. In the following explanation, similar parts to those in the first example are denoted by similar reference numerals, and the explanation is focused on the difference from the first example.

Referring to Fig. 10, in step S1-4, if an image of a 2-dimensional code is captured using the digital camera 32 of the portable terminal 2, the controller 25 temporarily stores the captured 2-dimensional code as image data in the storage unit 26. The controller 25 analyzes the 2-dimensional code included in the captured image data (step S2-1). That is, the controller 25 extracts information (position information) associated with a current position and a destination and authentication information needed to access the server 3, from the image data of the 2-dimensional code.

If the controller 25 can extract neither position information nor authentication information needed to access the server 3 (step S2-2 is answered negatively), the controller 25 displays an error message on the display unit 31 (step S2-3). On the other hand, if position information and authentication information are successfully extracted from the image data (step S2-2 is answered affirmatively), the controller 25 transmits the extracted position information and authentication information to the server 3 (step S2-4). Thereafter, as in the first embodiment, the portable terminal 2 (the controller 25) waits for route guidance information transmitted, in response to the image data (the 2-dimensional code), from the server 3 (step S1-6).

On the other hand, the server 3 waits for the position information and the authentication information transmitted from the portable terminal 2 (step S2-5). If position information and authentification information are received (step S2-5 is answered affirmatively), the data transmission/reception unit 37 performs processing in a similar manner to the first example (steps S1-12 to S1-18) to produce route guidance information or error information and transmit the produced information to the portable terminal 2.

The second example described above provides the following advantages.

In the second example, the navigation apparatus 1 produces a 2-dimensional code based on position information associated with a current position (a car-parking position) and a destination, and displays the produced 2-dimensional code on the display unit 23. The portable terminal 2 reads the displayed 2-dimensional code by capturing the image of the 2-dimensional code using the digital camera 32 and analyzes the image data (the 2-dimensional code). The portable terminal 2 extracts the position information from the 2-dimensional code and transmits the extracted position information to the server 3. The server 3 searches for a route from the car-parking position to the destination based on the position information received from the portable terminal 2 and transmits route guidance information to the portable terminal 2.

Thus, in a case in which a user leaves his/her vehicle M en route to the destination, and walks or uses a public transportation system to reach the destination, the user can acquire information associated with the route from the car-parking position to the destination via the portable terminal 2, even if the portable terminal 2 does not have a position detection capability using a GPS or the like and a route searching capability. The user does not need to operate input buttons or the like of the portable terminal 2 to input information associated with the destination. This provides great convenience to the user. The server 3 does not need to analyze the image data (the 2-dimensional code), and thus a processing burden imposed on the server 3 is reduced.

### First Embodiment

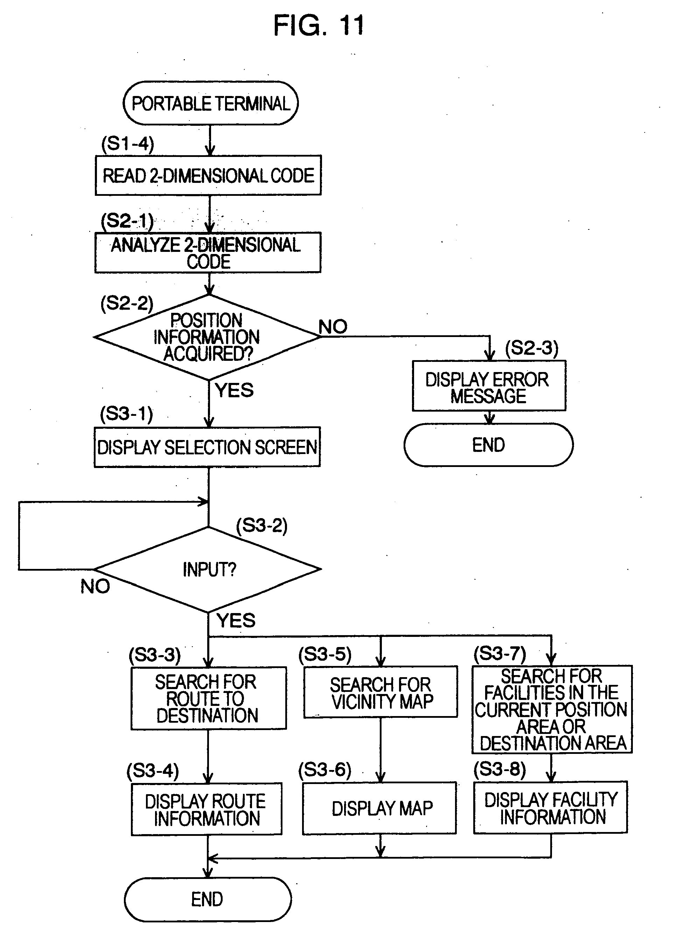

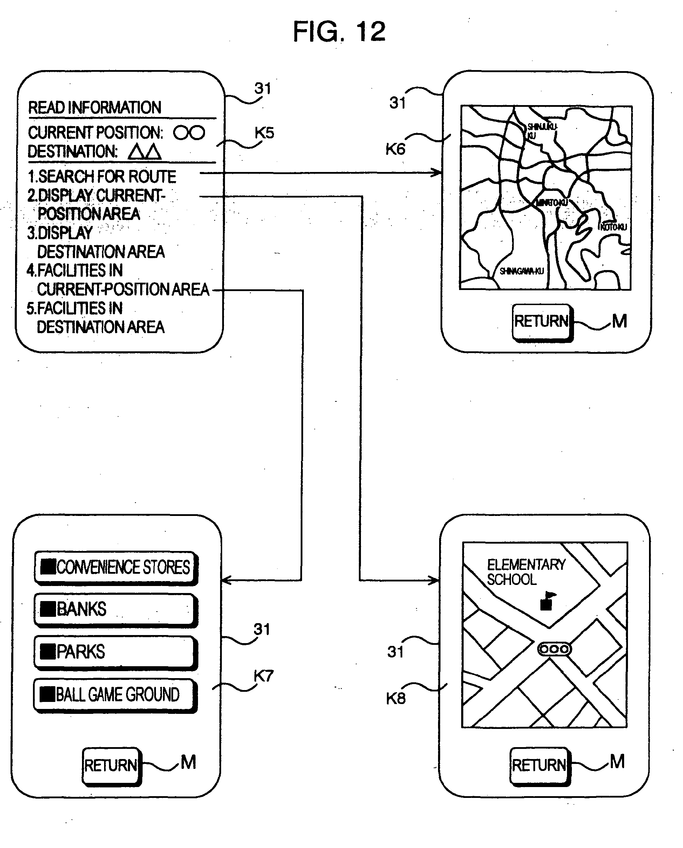

A first embodiment of the present invention is described below with reference to Figs. 11 and 12. The embodiment is similar to the second example except for some modifications in the configuration of the portable terminal 2 and the process performed by the portable terminal 2. In the following explanation, similar parts to those in the second example are denoted by similar reference numerals, and the explanation is focused on the difference from the first example.

The present embodiment is different from the second example in that route guidance information is produced not by the server 3 but by the portable terminal 2. To this end, the portable terminal 2 stores map data, search data and facility data in the storage unit of the portable terminal 2, and the controller 25 has a capability of searching for a route from a current position to a destination and a capability of searching for facilities located in various areas. Furthermore, the controller 25 of the portable terminal 2 has a capability of analyzing a 2-dimensional code by communicating with the navigation apparatus 1.

A route guidance method according to the present embodiment of the invention is described below with reference to Fig. 11. Fig. 11 is a flow chart showing a process according to the present embodiment. Fig. 12 is a schematic diagram showing examples of screens displayed on the display unit 31 of the portable terminal 2.

Referring to Fig. 11, in step S1-4, if an image of a 2-dimensional code is captured using the digital camera 32 of the portable terminal 2, the controller 25 temporarily stores the captured 2-dimensional code as image data in the storage unit 26. The controller 25 analyzes the 2-dimensional code included in the captured image data (step S2-1). That is, the controller 25 extracts information (position information) associated with a current position and a destination from the image data of the 2-dimensional code. Note that in the present embodiment the 2-dimensional code does not include authentication information for access to the server 3, because no data from the server 3 is necessary.

If position information is extracted from the image data (step S2-2 is answered affirmatively), the controller 25 displays a menu screen K5 on the display unit 31 as shown in Fig. 12, and waits for some item to be selected from the menu (steps S3-1 and 3-2). The "current position" and the "destination" extracted from the 2-dimensional code are displayed on the menu screen K5. Furthermore, the menu screen K5 also includes a "Search for route" button, a "Display current-position area" button, and a "Display destination area" button.

If the "Search for route" button is selected on the menu screen K5 (step S3-2 is answered affirmatively), The controller 25 searches for a route from the current position to the destination based on the search data stored in the storage unit 26 (step S3-3). Based on optimum route information obtained as a result of the searching, the controller 25 produces route information used to display a map including the optimum route from map data stored in the storage unit 26, and the controller 25 displays the route on the display unit 31 of the portable terminal 2 (step S3-4). More specifically, a map screen K6 such as that shown in Fig. 12 is displayed on the display unit 31, and a map of a relative wide area indicating the route from the car-parking position to the destination is displayed on the map screen K6.

If the "Display current-position area" button or the "Display destination area" button is selected on the menu screen K5 (step S3-2 is answered affirmatively), the controller 25 searches for map data associated with the current position or the destination based on the extracted position information (step S3-5).

The controller 25 displays a map on the display unit 31 (step S3-6). That is, a display screen K8 is displayed on the display unit 31 and a map of an area in the vicinity of the current position (the car-parking position) or an area in the vicinity of the destination is displayed on the display screen K8 as shown in Fig. 12.

On the other hand, "Facilities in current-position area" or "Facilities in destination area" is selected on the menu screen K5 (step S3-2 is answered affirmatively), the controller 25 first displays a facility category selection screen K7, as shown in Fig. 12. The controller 25 then searches for facilities associated with the current position or the destination based on a facility category selected on the facility category selection screen K7 and the extracted position information (step S3-7). The controller 25 displays information indicating detected facilities on the display unit 31 (step S3-8).

The user moves in accordance with the map and the facility information displayed on the display unit 31 of the portable terminal 2.

The first embodiment described above provides the following advantages.

In the first embodiment, the navigation apparatus 1 produces a 2-dimensional code based on position information and displays the produced 2-dimensional code on the display unit 31. The portable terminal 2 reads the displayed 2-dimensional code by capturing the image of the 2-dimensional code using the digital camera 32 and analyzes the image data. Based on data obtained as a result of the analysis, the portable terminal 2 searches for a route from the current position (car-parking position) to the destination, a map of an area in the vicinity of the car-parking position or in the vicinity of the destination, and facilities. Based on information obtained via the searching, a screen indicating the map and facility information is displayed on the display unit 31 of the portable terminal 2.

Thus, in a case in which a user leaves his car en route to the destination, and walks or uses a public transportation system to reach the destination, the user can acquire information associated with the route from the car-parking position to the destination via the portable terminal 2, even if the portable terminal 2 does not have a position detection capability using a GPS or the like. The user does not need to operate input buttons or the like of the portable terminal 2 to input information associated with the destination. This provides great convenience to the user. Because the portable terminal 2 has the route search capability, the user can acquire information associated with the route from the current position (car-parking position) to the destination by using the portable terminal 2 even in a bad communication environment.

### Second Embodiment

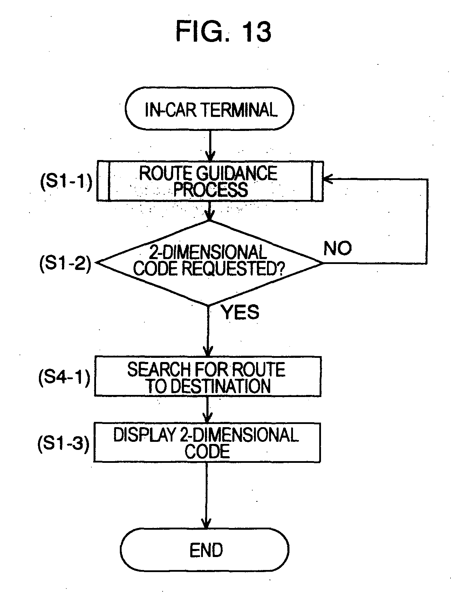

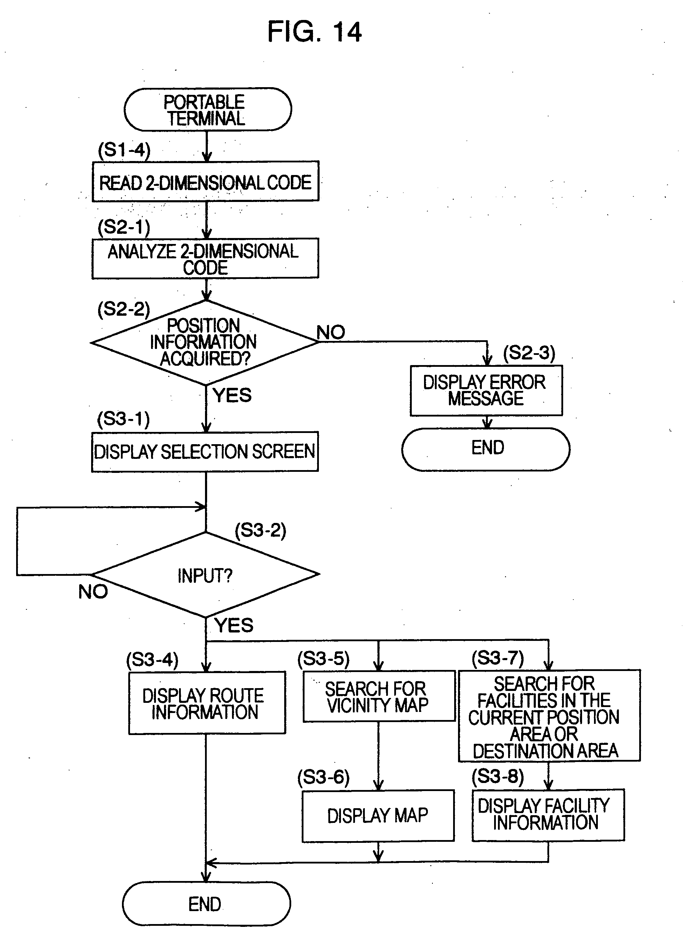

A second embodiment of the present invention is described below with reference to Figs. 13 and 14. The second embodiment is similar to the first embodiment except for some modifications in terms of the configuration of the navigation apparatus 1 and the processing performed by the navigation apparatus 1.

In the following explanation, similar parts to those in the first embodiment are denoted by similar reference numerals, and the explanation is focused on the difference from the third embodiment.

In the present embodiment, as shown in Fig. 13, the main controller 10 of the navigation apparatus 1 searches for a route from a current position (a car-parking position) to a destination, based on search data and map data stored in the storage unit 7 (step S4-1). The main controller 10 produces a 2-dimensional code based on optimum route information obtained as a result of the searching and based on information associated with the car-parking position and the destination.

The main controller 10 displays the produced 2-dimensional code on the display unit 23 (step S1-3). The 2-dimensional code produced by the code generator 13 of the navigation apparatus 1 includes information associated with the current position, the destination, and the optimum route.

As shown in Fig. 14, the portable terminal 2 stores at least facility data in the storage unit 26. The portable terminal 2 captures a 2-dimensional code displayed on the display unit 23 of the navigation apparatus 1 by using the digital camera 32 (step S1-4). The controller 25 of the portable terminal 2 analyzes image data obtained by capturing the 2-dimensional code (step S2-1).

If information (position information) associated with a current position and a destination and optimum route information are extracted from the image data (step S2-2 is answered affirmatively), the controller 25 performs processing similar to that performed in the third embodiment to display a map indicating a route, a map of an area in the vicinity of the current position or in the vicinity of the destination, and a screen indicating facility information on the display unit 31. In the present embodiment, unlike the third embodiment, the portable terminal 2 does not search for a route to the destination, because the optimum route information is provided from the navigation apparatus 1.

The second embodiment described above provides advantages described below.

In the second embodiment, based on search data and map data stored in the storage unit 7 of the navigation apparatus 1, the navigation apparatus 1 searches for a route from a current position (car-parking position) to a destination. Furthermore, the navigation apparatus 1 produces a 2-dimensional code based on the produced optimum route information, and displays the produced 2-dimensional code on the display unit 23. The portable terminal 2 reads the displayed 2-dimensional code by capturing the image of the 2-dimensional code using the digital camera 32 and analyzes the image data. A map indicating the route, a map of an area in the vicinity of the current position or in the vicinity of the destination, and a screen indicating facility information are displayed on the display unit 31 of the portable terminal 2.

Thus, in a case in which a user leaves his car en route to the destination, and walks or uses a public transportation system to reach the destination, the user can acquire information associated with the route from the car-parking position to the destination via the portable terminal 2, even if the portable terminal 2 does not have a position detection capability using a GPS or the like and a searching capability. The user does not need to operate input buttons or the like of the portable terminal 2 to input information associated with the destination. This provides great convenience to the user.

### Third Example

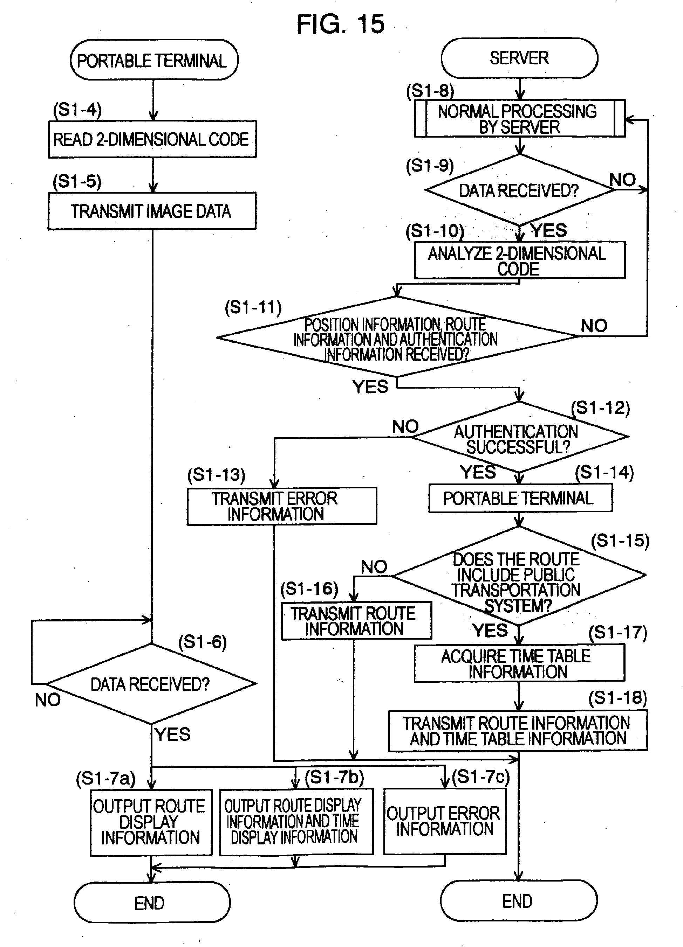

A third example for explaining the present invention is described below with reference to Fig. 15. In the third example, the navigation apparatus 1 of the first example is modified as modified in the first embodiment. In the following explanation, similar parts to those in the first embodiment are denoted by similar reference numerals, and the explanation is focused on the difference from the first example.

The navigation apparatus 1 has the search capability based on search data and map data stored in the storage unit 7 of the navigation apparatus 1. The navigation apparatus 1 searches for an optimum route and produces a 2-dimensional code including optimum route information. The server 3 does not search for an optimum route, because the searching is performed by the navigation apparatus 1.

Referring to Fig. 15, the data transmission/reception unit 37 of the server 3 analyzes the image data of the 2-dimensional code to extract position information, optimum route information, and authentication information. If the authentication information is verified as valid (step S1-12 is answered affirmatively), the data transmission/reception unit 37 of the server 3 performs step S1-15 without performing a searching process.

The third example described above provides advantages described below.

In the third example, the navigation apparatus 1 searches for a route from a car-parking position to a destination based on the position information. Furthermore, the navigation apparatus 1 produces a 2-dimensional code based on the produced optimum route information, and displays the produced 2-dimensional code on the display unit 23. The portable terminal 2 reads the displayed 2-dimensional code by capturing the image of the 2-dimensional code using the digital camera 32 and transmits the image data to the server 3. The server 3 analyzes the received image data to extract the optimum route information. Based on the extracted optimum route information, the server 3 produces route guidance information, a map of an area in the vicinity of the current position (car-parking position) or in the vicinity of the destination, and facility information and transmits the produced information to the portable terminal 2.

Thus, in a case in which a user leaves his car en route to the destination, and walks or uses a public transportation system to reach the destination, the user can acquire information associated with the route from the car-parking position to the destination via the portable terminal 2, even if the portable terminal 2 does not have a position detection capability using a GPS or the like, a route searching capability, and a 2-dimensional code analysis capability. The user does not need to operate input buttons or the like of the portable terminal 2 to input information associated with the destination. This provides great convenience to the user. The server 3 does not need to perform the searching process, and thus a processing burden imposed on the server 3 is reduced.

Although the present invention has been described above with reference to embodiments, the present invention is not limited to the details of these embodiments, but various modifications are possible. Some examples of modifications are described below.

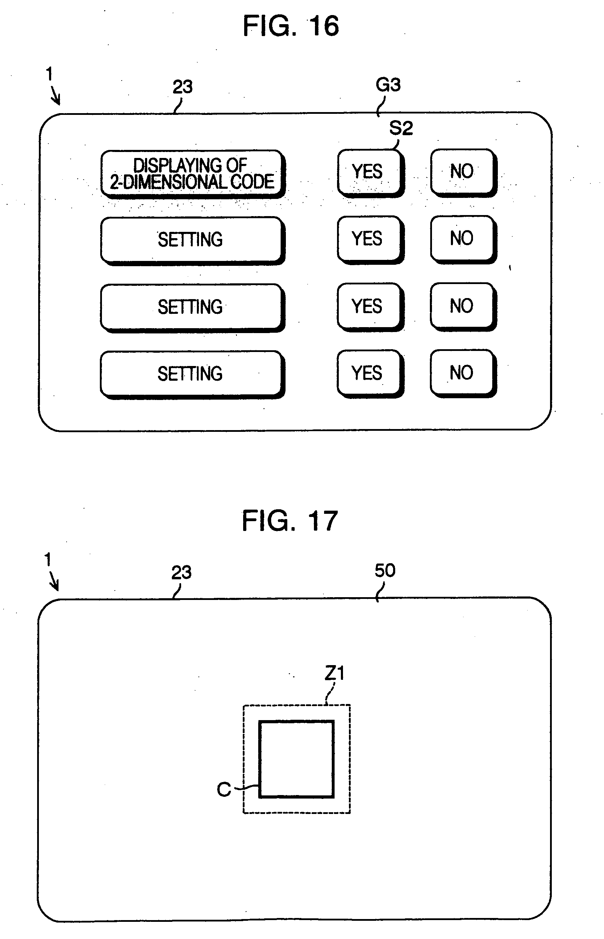

In the embodiments described above, when a user presses a destination transfer button S1 on the setting screen G1 displayed on the display unit 23 of the navigation apparatus 1, the navigation apparatus 1 displays the 2-dimensional code on the display unit 23. Alternatively, the navigation apparatus 1 may display the 2-dimensional code on the display unit 23 when a car has reaches a vicinity of a destination. More specifically, if a selection button S2 corresponding to "Displaying of 2-dimensional code" on a setting screen G3 shown in Fig. 16 is pressed, the navigation apparatus 1 determines that a destination transfer command has been issued (step S1-2 is answered affirmatively). When the navigation apparatus 1 determines that the car has reached an area within a predetermined distance (for example, 500 m) from the destination or a departure station, the navigation apparatus 1 displays the 2-dimensional code including position information on the display unit 23.

In the embodiments described above, the code displayed on the display unit 23 of the navigation apparatus 1 is in the 2-dimensional form. Alternatively, a bar code may be used. In this case, the portable terminal captures the image of the bar code using the digital camera 32 thereby acquiring image data. The image data is analyzed by the portable terminal 2 or the server 3 to extract the information associated with the current position and the destination.

In the embodiments and examples described above, only the 2-dimensional code C may be displayed on a screen 50 on the display unit 23 of the navigation apparatus 1 as shown in Fig. 17. More specifically, for example, the 2-dimensional code C may be displayed in a display area Z1 located at the substantial center of the screen 50.

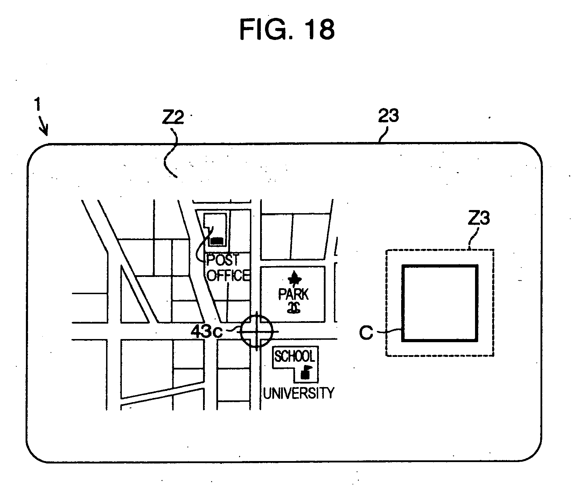

In the embodiments and examples described above, a screen 51 may be displayed on the display unit 23 of the navigation apparatus 1, as shown in Fig. 18. More specifically, a map of, for example, a current-position area may be displayed in an area Z2 on the left-hand side of the screen 51, and a 2-dimensional code C may be displayed in an area Z3 on the right-hand side of the screen 51.

In the examples, the server 3 may not perform the process of searching for a route or a running schedule of a transportation system.

Further, information associated with routes of public transportation systems such as a train system may be stored in the storage unit 26 of the portable terminal 2. The controller 25 of the portable terminal 2 may produce information associated with a route and a running schedule of a transportation system based on the information stored in the storage unit 26.

Further, the 2-dimensional code produced by the navigation apparatus and read by the portable terminal 2 may be analyzed by the server 3 and resultant decoded data may be returned to the portable terminal 2.

When the portable terminal 2 accesses the server 3, the authentication process performed between the portable terminal 2 and the server 3 may be omitted. In this case, the 2-dimensional code does not need to include authentication information, and thus it is possible to reduce the data size of the code.

The portable terminal 2 may have the position detection capability using a GPS or the like, and may further have the route searching capability. Even in this case, the portable terminal 2 can acquire the information associated with the destination from the navigation apparatus 1 without needing to re-input the information. This is very convenient for the user.

The navigation apparatus 1 is assumed to be installed in the vehicle M, Alternatively, the navigation apparatus 1 may be a terminal installed, for example, in a store, an office, or other locations.

Examples for 2-dimensional codes are the QR code (DENSO), the PDF417 (Symbol Technologies), the DataMatrix code (RVSI Acuity CiMatrix), and the Maxi Code (UPS). Of course, other 2-dimensional codes or other x-dimensional codes (x=1, 2, 3, ...)can be used.

## Claims

1. A navigation method, comprising:
a step, performed by a navigation apparatus (1), of detecting a current position of a user;
a step (S1-1), performed by the navigation apparatus (1), of searching for a route from the current position to a destination;
a step (S1-3), performed by the navigation apparatus (1), of producing a code based on information associated with the destination and the current position en route to the destination
and displaying the produced code on a display (9);
a step (S1-4, S1-7a, b, S3-4), performed by a portable terminal (2), of acquiring the image information of the code by capturing the image of the code displayed on the display (9), and
a step, performed by the portable terminal (2), of providing route guidance based on the acquired image information.

2. A navigation method according to Claim 1, further comprising a step (S1-8 - S1-10), performed by an information server (3) connected to the portable terminal (2) via a two-way communication line, of receiving image information produced by capturing the image of the code by the portable terminal (2), and extracting information associated with the current position and the destination by analyzing the received image information.

3. A navigation method according to Claim 1, further comprising a step (S2-1 - S2-4), performed by the portable terminal (2), of extracting information associated with the current position and the destination by analyzing the image information obtained by capturing the image of the code.

4. A navigation method according to one of Claims 1 to 3, further comprising a step (S1-14), performed by an information server (3), of searching for a route from the current position to the destination based on the extracted information associated with the current position and the destination, and transmitting information associated with the route.

5. A navigation method according to one of Claims 1 to 3, further comprising a step (S3-3), performed by the portable terminal (2), of searching for a route from the current position to the destination based on the extracted information associated with the current position and the destination.

6. A navigation method according to one of Claims 2 to 3, further comprising a step (S4-1), performed by the navigation apparatus (1), of searching for a route from the current position to the destination based on the information associated with the current position and the destination, and incorporating information associated with the route into the code.

7. A navigation method according to one of Claims 1 to 6, further comprising a step (S1-15 - S1-18), performed by an information server (3) connected to the portable terminal (2) via a two-way communication line, of producing information on a route or a running schedule of a transportation system based on the extracted information associated with the current position and the destination and transmitting the produced information on the route or the running schedule of the transportation system to the portable terminal.

8. A navigation method according to one of Claims 1 to 7, further comprising a step (S3-2, S3-7, S3-8), performed by the portable terminal (2) or an information server (3) connected to the portable terminal (2) via a two-way communication line, of transmitting facility information associated with the current position or facility information associated with the destination to the portable terminal, based on the extracted information associated with the current position and the destination.

9. A navigation system comprising:
a navigation apparatus (1) comprising
a current position detection means (6) for detecting a current position;
a display means (9) for displaying map information;
a route search means for searching for a route from the current position to a destination; a control means (5) for generating a code based on information associated with the route to the destination;
display means (9) for displaying the generated code; wherein image information of the code is acquired by capturing means of a portable terminal (2) wherein the portable terminal (2) is adapted for providing route guidance based on the acquired image information, and
the portable terminal (2) comprising
an input means (27) for capturing an image of a code displayed on the display means (9) of the navigation apparatus (1), wherein the code comprises information associated with the destination and the current position en route to the destination;
means for acquiring image information of the code by using the captured image;
a controller (25) for analyzing the captured image and extracting the information associated with the destination and the current position en route to the the destination wherein the controller (25) is further adapted for producing route information including an optimum route and for displaying the optimum route on a display unit (31) of the portable terminal.

## Patentansprüche

1. Navigationsverfahren mit:
einem Schritt, der von einer Navigationsvorrichtung (1) durchgeführt wird, zum Detektieren einer gegenwärtigen Position eines Benutzers;
einem Schritt (S1-1), der von der Navigationsvorrichtung (1) durchgeführt wird, zum Suchen nach einer Route von der gegenwärtigen Position zu einem Ziel;
einem Schritt (S 1-3), der von der Navigationsvorrichtung (1) durchgeführt wird, zum Erzeugen eines Codes basierend auf Information, die zu dem Ziel und zu der gegenwärtigen Position auf der Route zu dem Ziel gehört, und zum Anzeigen des erzeugten Codes auf einer Anzeige (9);
einem Schritt (S1-4, S1-7a, b, S3-4), der von einem tragbaren Endgerät (2) durchgeführt wird, zum Erfassen der Bildinformation des Codes durch Erfassen des Bilds des Codes, der auf der Anzeige (9) angezeigt wird, und
einem Schritt, der von dem tragbaren Endgerät (2) durchgeführt wird, zum Bereitstellen einer Routenführung basierend auf der erfassten Bildinformation.

2. Navigationsverfahren nach Anspruch 1, ferner mit einem Schritt (S1-8 - S1-10), der von einem Informationsserver (3), der über eine Zweiwege-Kommunikationsleitung mit dem tragbaren Endgerät (2) verbunden ist, durchgeführt wird, zum Empfangen von Bildinformation, die erzeugt wird durch Erfassen des Bilds des Codes durch das tragbare Endgerät (2), und zum Extrahieren der Information, die zu der gegenwärtigen Position und dem Ziel gehört, durch Analyse der empfangenen Bildinformation.

3. Navigationsverfahren nach Anspruch 1, ferner mit einem Schritt (S2-1 - S2-4), der von dem tragbaren Endgerät (2) durchgeführt wird, zum Extrahieren von Information, die zu der gegenwärtigen Position und dem Ziel gehört, durch Analysieren der Bildinformation, die erhalten wird durch Erfassen des Bilds des Codes.

4. Navigationsverfahren nach einem der Ansprüche 1 bis 3, ferner mit einem Schritt (S1-14), der von einem Informationsserver (3) durchgeführt wird, zum Suchen nach einer Route von der gegenwärtigen Position zu dem Ziel basierend auf der extrahierten Information, die zu der gegenwärtigen Position und dem Ziel gehört, und zum Senden von Information, die zu der Route gehört.

5. Navigationsverfahren nach einem der Ansprüche 1 bis 3, ferner mit einem Schritt (S3-3), der von dem tragbaren Endgerät (2) durchgeführt wird, zum Suchen nach einer Route von der gegenwärtigen Position zu dem Ziel basierend auf der extrahierten Information, die zu der gegenwärtigen Position und dem Ziel gehört.

6. Navigationsverfahren nach einem der Ansprüche 2 bis 3, ferner mit einem Schritt (S4-1), der von der Navigationsvorrichtung (1) durchgeführt wird, zum Suchen nach einer Route von der gegenwärtigen Position zu dem Ziel basierend auf der Information, die zu der gegenwärtigen Position und dem Ziel gehört, und zum Einbinden der Information, die zu der Route gehört, in den Code.

7. Navigationsverfahren nach einem der Ansprüche 1 bis 6, ferner mit einem Schritt (S1-15 - S1-18), der von einem Informationsserver (3), der mit dem tragbaren Endgerät (2) über eine Zweiwege-Kommunikationsleitung verbunden ist, durchgeführt wird, zum Erzeugen von Information über eine Route oder einen Fahrplan eines Transportsystems basierend auf der extrahierten Information, die zu der gegenwärtigen Position und dem Ziel gehört, und zum Senden der erzeugten Information über die Route oder den Fahrplan des Transportsystems an das tragbare Endgerät.

8. Navigationsverfahren nach einem der Ansprüche 1 bis 7, ferner mit einem Schritt (S3-2, S3-7, S3-8), der von dem tragbaren Endgerät (2) oder einem Informationsserver (3), der mit dem tragbaren Endgerät (2) über eine Zweiwege-Kommunikationsleitung verbunden ist, durchgeführt wird, zum Senden von Standortinformation, die zu der gegenwärtigen Position gehört, oder Standortinformation, die zu dem Ziel gehört, an das tragbare Endgerät, basierend auf der extrahierten Information, die zu der gegenwärtigen Position und dem Ziel gehört.

9. Navigationssystem, mit:
einer Navigationsvorrichtung (1) mit
einem Detektionsmittel (6) einer gegenwärtigen Position zum Detektieren der gegenwärtigen Position,
einem Anzeigemittel (9) zum Anzeigen von Karteninformation,
einem Routensuchmittel zum Suchen nach einer Route von der gegenwärtigen Position zu einem Ziel,
einem Steuerungsmittel (5) zum Erzeugen eines Codes basierend auf einer Information, die zu der Route zu dem Ziel gehört,
einem Anzeigemittel (9) zum Anzeigen des erzeugten Codes; wobei die Bildinformation des Codes erfasst wird durch ein Erfassungsmittel eines tragbaren Endgeräts (2), wobei das tragbare Endgerät (2) angepasst ist zum Bereitstellen einer Routenführung basierend auf der erfassten Bildinformation; und
einem tragbaren Endgerät (2), mit
einem Eingabemittel (27) zum Erfassen eines Bilds eines Codes, der auf dem Anzeigemittel (9) der Navigationsvorrichtung (1) angezeigt wird, wobei der Code Information aufweist, die zu dem Ziel und der gegenwärtigen Position auf der Route zu dem Ziel gehört,
einem Mittel zum Erfassen von Bildinformation des Codes, indem das erfasste Bild verwendet wird,
einer Steuerung (25) zum Analysieren des erfassten Bilds und zum Extrahieren der Information, die zu dem Ziel und der gegenwärtigen Position auf der Route zu dem Ziel gehört,
wobei die Steuerung (25) ferner angepasst ist zum Erzeugen von Routeninformation, die eine optimale Route aufweist, und zum Anzeigen der optimalen Route auf einer Anzeigeeinheit (31) des tragbaren Endgeräts.

## Revendications

1. Procédé de navigation, comprenant :
une étape, effectuée par un appareil de navigation (1),
de détection d'une position actuelle d'un utilisateur ;
une étape (S1-1), effectuée par l'appareil de navigation (1), de recherche d'un itinéraire de la position actuelle à une destination ;
une étape (S1-3), effectuée par l'appareil de navigation (1), de production d'un code basé sur des informations associées à la destination et à la position actuelle en route vers la destination et
l'affichage du code produit sur un affichage (9) ;
une étape (S1-4, S1-7a, b, S3-4), effectuée par un terminal portable (2), d'acquisition des informations d'image du code par l'acquisition de l'image du code affiché sur l'affichage (9), et
une étape, effectuée par le terminal portable (2), de fourniture d'un guidage d'itinéraire sur la base des informations d'image acquises.

2. Procédé de navigation selon la revendication 1, comprenant en outre une étape (S1-8-S1-10), effectuée par un serveur d'informations (3) relié au terminal portable (2) par l'intermédiaire d'une ligne de communication bidirectionnelle, de réception d'informations d'image produites par l'acquisition de l'image du code par le terminal portable (2), et d'extraction d'informations associées à la position actuelle et à la destination par l'analyse des informations d'image reçues.

3. Procédé de navigation selon la revendication 1, comprenant en outre une étape (S2-1, S2-4), effectuée par le terminal portable (2), d'extraction d'informations associées à la position actuelle et à la destination par l'analyse des informations d'image obtenues par l'acquisition de l'image du code.

4. Procédé de navigation selon l'une des revendications 1 à 3, comprenant en outre une étape (S1-14), effectuée par un serveur d'informations (3), de recherche d'un itinéraire de la position actuelle à la destination sur la base des informations extraites associées à la position actuelle et à la destination, et de transmission des informations associées à l'itinéraire.

5. Procédé de navigation selon l'une des revendications 1 à 3, comprenant en outre une étape (S3-3), effectuée par le terminal portable (2), de recherche d'un itinéraire de la position actuelle à la destination sur la base des informations extraites associées à la position actuelle et à la destination.

6. Procédé de navigation selon l'une des revendications 2 et 3, comprenant en outre une étape (S4-1), effectuée par l'appareil de navigation (1), de recherche d'un itinéraire de la position actuelle à la destination sur la base des informations associées à la position actuelle et à la destination, et d'incorporation d'informations associées à l'itinéraire dans le code.

7. Procédé de navigation selon l'une des revendications 1 à 6, comprenant en outre une étape (S1-15-S1-18), effectuée par un serveur d'informations (3) relié au terminal portable (2) par l'intermédiaire d'une ligne de communication bidirectionnelle, de production d'informations sur un itinéraire ou un horaire de fonctionnement d'un système de transport sur la base des informations extraites associées à la position actuelle et à la destination et de transmission des informations produites sur l'itinéraire ou l'horaire de fonctionnement du système de transport au terminal portable.

8. Procédé de navigation selon l'une des revendications 1 à 7, comprenant en outre une étape (S3-2, S3-7, S3-8), effectuée par le terminal portable (2) ou un serveur d'informations (3) relié au terminal portable (2) par l'intermédiaire d'une ligne de communication bidirectionnelle, de transmission d'informations d'infrastructures associées à la position actuelle ou d'informations d'infrastructures associées à la destination au terminal portable, sur la base des informations extraites associées à la position actuelle et à la destination.

9. Système de navigation comprenant :
un appareil de navigation (1) comprenant un moyen de détection de position actuelle (6) pour détecter une position actuelle ;
un moyen d'affichage (9) pour afficher des informations de carte ;
un moyen de recherche d'itinéraire pour rechercher un itinéraire de la position actuelle à une destination ;
un moyen de commande (5) pour générer un code sur la base d'informations associées à l'itinéraire jusqu'à la destination ;
un moyen d'affichage (9) pour afficher le code généré ;
dans lequel des informations d'image du code sont acquises par un moyen d'acquisition d'un terminal portable (2), dans lequel le terminal portable (2) est apte à fournir un guidage d'itinéraire sur la base des informations d'image acquises, et
le terminal portable (2) comprenant
un moyen d'entrée (27) pour acquérir une image d'un code affiché sur le moyen d'affichage (9) de l'appareil de navigation (1), dans lequel le code comprend des informations associées à la destination et à la position actuelle en route vers la destination ;
un moyen d'acquisition d'informations d'image du code en utilisant l'image acquise ;
un organe de commande (25) pour analyser l'image acquise et extraire les informations associées à la destination et à la position actuelle en route vers la destination, dans lequel l'organe de commande (25) est en outre apte à produire des informations d'itinéraire comprenant un itinéraire optimal et à afficher l'itinéraire optimal sur l'unité d'affichage (31) du terminal portable.
